# EUROPEAN PATENT APPLICATION

(11) **EP 3 099 112 A1**
(43) Date of publication of application: **30.11.2016**
(21) Application number: 15740617.4
(22) Date of filing: 19.01.2015
(51) Int. Cl.: H04W 48/10, H04W 76/02

(54) **TERMINAL DEVICE, COMMUNICATION SYSTEM, ACCESS CONTROL METHOD, AND INTEGRATED CIRCUIT**

(30) Priority: 24.01.2014 JP 2014010859
(71) Applicant: Sharp Kabushiki Kaisha, Sakai-shi Osaka 590-8522 (JP)
(72) Inventor: TSUBOI Hidekazu, Osaka 590-8522 (JP); UEMURA Katsunari, Osaka 590-8522 (JP)
(74) Representative: Müller-Boré & Partner Patentanwälte PartG mbB
(86) International application number: PCT/JP2015/051211
(87) International publication number: WO 2015/111539

(57) **Abstract**

A terminal apparatus according to an embodiment is a terminal apparatus communicating with a base station apparatus, including: a data processing unit that obtains barring skip information broadcasted from the base station apparatus; and a radio resource control unit that obtains a request for setting up radio resource control connection and a cause for setting up the radio resource control connection from a higher layer of a radio resource control layer of the terminal apparatus. The barring skip information is information indicating skipping access barring against a specific call. The data processing unit outputs the barring skip information to the radio resource control unit. The radio resource control unit, in a case where setting up of the radio resource control connection is for the specific call and the barring skip information is broadcasted, judges that access barring is not underway regardless of a running state of a timer for judging whether or not access by a call is barred, and in a case where setting up of the radio resource control connection is for the specific call and the barring skip information is not broadcasted, performs an access barring check in a call based on a cause for setting up a normal call even in a case of a specific call.

## Description

### Technical Field

The present invention relates to a technique of a terminal apparatus, a communication system, an access control method, and an integrated circuit for performing access control efficiently.

This application claims priority based on Japanese Patent Application No. 2014-010859 filed in Japan on January 24, 2014, the content of which is incorporated herein.

### Background Art

In 3GPP (3rd Generation Partnership Project) which is a standardization project, standardization of Evolved Universal Terrestrial Radio Access (hereinafter, referred to as EUTRA) is performed, in which high speed communication is realized by adopting an OFDM (Orthogonal Frequency-Division Multiplexing) communication scheme and flexible scheduling with a predetermined frequency and time unit called a resource block.

Moreover, in the 3GPP, a discussion on Advanced EUTRA that realizes higher-speed data transmission and has an upward compatibility with the EUTRA has been carried out.

In the EUTRA, it is prescribed that, as a mechanism of access control (access barring), an Access Stratum (AS) function of a terminal apparatus determines whether or not access barring is underway by using "ac-BarringForMO-Data" and "ac-BarringForMO-Signalling" broadcasted in a serving cell and an IMS/MMTEL function of the terminal apparatus determines whether or not access barring is underway by using "ssac-BarringForMMTEL-Voice-r9" and "ssac-BarringForMMTEL-Video-r9" broadcasted in a serving cell. Further, in the Advanced EUTRA, it is prescribed that the AS function of the terminal apparatus (a mobile station apparatus, also referred to as UE) determines whether or not access barring is underway by using access barring information for CSFB (ac-BarringForCSFB-r10) or access barring information for MTC (Machine Type Communication) (eab-Param-r11) broadcasted in the serving cell (NPL 1).

With the current mechanism of access barring, however, the access barring with the AS function is performed after the IMS/MMTEL function (IP Multimedia Subsystem/multimedia telephony function) determines whether or not access barring is underway, so that it is difficult to prioritize communication of the IMS/MMTEL over other communication (except for an emergency call). Thus, in the Advanced EUTRA, further, a mechanism in which access barring with the AS function is not performed (skipped) in the case of communication with the IMS/MMTEL function has been studied (NPL 2).

### Citation List

### Patent Literature

NPL 1: 3GPP TS 36.331 V11.6.0 (2013-12) http://www.3gpp.org/ftp/Specs/archive/36_series/36.331/
NPL 2: 3GPP TR 36.848 V1.0.0 (2013-11) http://www.3gpp.org/ftp/Specs/archive/36_series/36.848/

### Summary of Invention

### Technical Problem

NPL 2 proposes that the terminal apparatus acquires, from broadcast information of a serving cell, one-bit information indicating whether or not to perform access barring with the AS function when transmitting transmission data from the IMS/MMTEL function, but does not propose how to discriminate between transmission data for which access barring with the AS function is performed and transmission data for which access barring with the AS function is not performed (for example, between communication of the IMS/MMTEL and other communication).

Further, though NPL 2 proposes that the aforementioned discrimination is performed based on QCI (QoS Class Identifier) of transmission data, the QCI of transmission data input from a higher layer is unknown in the AS function in a state where radio connection is not established and therefore it is difficult to discriminate between transmission data for which access barring with the AS function is performed and transmission data for which access barring with the AS function is not performed.

Embodiments of the invention have been made in view of the aforementioned problems and aims to solve at least one of the aforementioned problems by providing a technique of a terminal apparatus, a communication system, an access control method, and an integrated circuit capable of performing access control efficiently. Solution to Problem

(1) A terminal apparatus according to an embodiment of the invention is a terminal apparatus communicating with a base station apparatus, including: a data processing unit configured to obtain barring skip information broadcasted from the base station apparatus and a radio resource control unit configured to obtain a request for setting up radio resource control connection and a cause for setting up the radio resource control connection from a higher layer of a radio resource control layer of the terminal apparatus, in which the barring skip information is information indicating skipping access barring against a specific call, the data processing unit outputs the barring skip information to the radio resource control unit, and the radio resource control unit judges, in a case where setting up of the radio resource control connection is for the specific call and the barring skip information is broadcasted, that access barring is not underway regardless of a running state of a timer for judging whether or not access by a call is barred, and performs, in a case where setting up of the radio resource control connection is for the specific call and the barring skip information is not broadcasted, an access barring check in a call based on a cause for setting up a normal call even in a case of a specific call.
(2) A communication system according to another embodiment of the invention is a communication system including a terminal apparatus and a base station apparatus communicating with the terminal apparatus, in which the base station apparatus includes barring skip information for skipping access barring against a specific call in broadcast information and transmits the broadcast information including the barring skip information and the terminal apparatus obtains the barring skip information and obtains a request for setting up radio resource control connection and a cause for setting up the radio resource control connection from a higher layer of a radio resource control layer of the terminal apparatus, and in a case where setting up of the radio resource control connection is for the specific call and the barring skip information is broadcasted, the terminal apparatus judges that access barring is not underway regardless of a running state of a timer for judging whether or not access by a call is barred, and in a case where setting up of the radio resource control connection is for the specific call and the barring skip information is not broadcasted, the terminal apparatus performs an access barring check in a call based on a cause for setting up a normal call even in a case of a specific call.
(3) An access control method according to another embodiment of the invention is an access control method applied to a terminal apparatus communicating with a base station apparatus, the method including at least the steps of: obtaining, from the base station apparatus, barring skip information for skipping access barring against a specific call; obtaining, from a higher layer of a radio resource control layer of the terminal apparatus, a request for setting up radio resource control connection and a cause for setting up the radio resource control connection; judging, in a case where setting up of the radio resource control connection is for the specific call and the barring skip information is broadcasted, that access barring is not underway regardless of a running state of a timer for judging whether or not access by a call is barred; and performing, in a case where setting up of the radio resource control connection is for the specific call and the barring skip information is not broadcasted, an access barring check in a call based on a cause for setting up a normal call even in a case of a specific call.
(4) An integrated circuit according to another embodiment of the invention is an integrated circuit mounted in a terminal apparatus communicating with a base station apparatus, the integrated circuit causing the terminal apparatus to exert the functions of: obtaining, from the base station apparatus, barring skip information for skipping access barring against a specific call; obtaining, from a higher layer of a radio resource control layer of the terminal apparatus, a request for setting up radio resource control connection and a cause for setting up the radio resource control connection; judging, in a case where setting up of the radio resource control connection is for the specific call and the barring skip information is broadcasted, that access barring is not underway regardless of a running state of a timer for judging whether or not access by a call is barred, and performing, in a case where setting up of the radio resource control connection is for the specific call and the barring skip information is not broadcasted, an access barring check in a call based on a cause for setting up a normal call even in a case of a specific call. Advantageous Effects of Invention

As described above, according to the embodiments of the invention, it is possible to provide a technique of a terminal apparatus, a communication system, an access control method, and an integrated circuit capable of performing access control efficiently.

### Brief Description of Drawings

[Fig. 1] Fig. 1 is a block diagram illustrating an example of a schematic configuration of a terminal apparatus according to an embodiment of the invention.
[Fig. 2] Fig. 2 is a block diagram illustrating an example of a schematic configuration of a base station apparatus according to the embodiment of the invention.
[Fig. 3] Fig. 3 illustrates an example of a flowchart related to access control when RRC connection is established in a terminal apparatus according to a first embodiment of the invention.
[Fig. 4] Fig. 4 illustrates an example of a flowchart related to access control when RRC connection is established in a terminal apparatus according to a second embodiment of the invention.
[Fig. 5] Fig. 5 illustrates a User-plane (UP (U-Plane)) protocol stack according to an embodiment of the invention.
[Fig. 6] Fig. 6 illustrates a Control-plane (CP (C-Plane)) protocol stack according to an embodiment of the invention.
[Fig. 7] Fig. 7 illustrates an example of a sequence chart related to ATTACH processing to a network by a conventional terminal apparatus.
[Fig. 8] Fig. 8 illustrates an example of a flowchart related to establishment of RRC connection with a base station apparatus by a conventional terminal apparatus. Description of Embodiments

A technique related to each embodiment of the invention will be briefly described below.

### [Physical channel/Physical signal]

Description will be given for a physical channel and a physical signal which are primarily used in EUTRA and Advanced EUTRA A channel means a medium used for signal transmission and reception, and a physical channel means a physical medium used for signal transmission and reception. In the invention, a physical channel and a signal may be used synonymously. There is a possibility that in the EUTRA and the Advanced EUTRA, a physical channel is added or a structure or a format style thereof is modified or added in the future, but even in the case of modification or addition, there is no influence on description of each embodiment of the invention.

In the EUTRA and the Advanced EUTRA, scheduling of the physical channel or the physical signal is managed by using a radio frame. One radio frame is 10 ms and one radio frame is configured by ten subframes. Further, one subframe is configured by two slots (that is, one subframe has 1 ms and one slot has 0.5 ms). Moreover, management is performed by using a resource block as a minimum unit of scheduling, in which physical channels are arranged. The resource block is defined as a fixed frequency domain in which a frequency axis is configured by an assembly of a plurality of subcarriers (for example, twelve subcarriers) and a domain configured by a fixed transmission time interval (one slot).

Synchronization Signals are configured by three types of primary synchronization signals and secondary synchronization signals which are configured by 31 types of codes which are arranged alternately in a frequency domain, and a combination of signals of the primary synchronization signals and the secondary synchronization signals indicates 504 cell identifiers (physical cell ID (PCI: Physical Cell Identity)), which identify a base station apparatus, and a frame timing for radio synchronization. A terminal apparatus specifies a physical cell ID of synchronization signals received by cell search.

A Physical Broadcast CHannel (PBCH) is transmitted for the purpose of notifying (configuring) a control parameter (broadcast information (System Information (SI))) which is used in common among terminal apparatuses in a cell. Regarding broadcast information which is not notified by the physical broadcast channel, a radio resource whose broadcast information is transmitted is notified to a terminal apparatus in a cell by a physical downlink control channel, and in the notified radio resource, a layer 3 message (system information) for notifying the broadcast information is transmitted by a physical downlink shared channel.

As the broadcast information, a Cell Global Identifier (CGI) indicating an identifier of an individual cell, a Tracking Area Identifier (TAI) for managing a standby area by paging, random access configuration information, transmission timing adjustment information, shared radio resource configuration information in the cell, neighbor cell information, uplink access restriction information or the like is notified.

Downlink reference signals are classified into a plurality of types depending on intended use thereof. For example, Cell-specific RSs (CRS: Cell-specific Reference Signals) are pilot signals which are transmitted with predetermined power for each cell, and are downlink reference signals which are iterated periodically in a frequency domain and a time domain based on a predetermined rule. The terminal apparatus measures reception quality of each cell by receiving the cell-specific RSs. Moreover, the terminal apparatus uses the downlink cell-specific RSs also as reference signals for demodulation of the physical downlink control channel or the physical downlink shared channel, which is transmitted at the same time with the cell-specific RSs. As a sequence used for the cell-specific RSs, a sequence which is identifiable for each cell is used.

The downlink reference signals are used also for estimation of channel fluctuation of the downlink. The downlink reference signals used for the estimation of channel fluctuation are referred to as Channel State Information Reference Signals (CSI-RSs). The downlink reference signals which are configured individually to the terminal apparatus are referred to as UE specific Reference Signals (URSs), or Dedicated RSs (DRSs), and referred to for channel compensation processing of a channel when the physical downlink control channel or the physical downlink shared channel is demodulated.

The Physical Downlink Control CHannel (PDCCH) is transmitted in several OFDM symbols (for example, 1 to 4 OFDM symbols) from the head of each subframe. An Enhanced Physical Downlink Control CHannel (EPDCCH) is a physical downlink control channel which is arranged in an OFDM symbol in which the Physical Downlink Shared CHannel PDSCH is arranged. The PDCCH or the EPDCCH is used for the purpose of notifying the terminal apparatus of radio resource allocation information in accordance with scheduling of a base station apparatus and information for giving instruction of an adjustment amount of increase or decrease in transmit power. Hereinafter, when simply described as the Physical Downlink Control CHannel (PDCCH), it means both physical channels of the PDCCH and the EPDCCH unless otherwise specified.

The terminal apparatus needs to acquire radio resource allocation information called uplink grant in the case of transmission and downlink grant (downlink assignment) in the case of reception from the physical downlink control channel by monitoring the physical downlink control channel addressed to the terminal apparatus before transmitting or receiving a layer 3 message (paging, hand-over command, and the like) that is downlink data or downlink control data, and by receiving the physical downlink control channel addressed to the terminal apparatus. Note that, the physical downlink control channel may be configured so as to be, other than to be transmitted in the OFDM symbols described above, transmitted in a domain of a resource block allocated from the base station apparatus to the terminal apparatus in an individual (dedicated) manner.

A Physical Uplink Control CHannel (PUCCH) is used for performing a reception confirmation response (ACK/NACK: ACKnowledgement/Negative ACKnowledgement) of data transmitted on the physical downlink shared channel, channel (channel state) information (CSI: Channel State Information) of the downlink, and a radio resource allocation request (radio resource request, Scheduling Request (SR)) of the uplink.

CSI includes a CQI (Channel Quality Indicator), a PMI (Precoding Matrix Indicator), a PTI (Precoding Type Indicator), and an RI (Rank Indicator). Each indicator may be described as indication.

The Physical Downlink Shared CHannel (PDSCH) is used also for notifying the terminal apparatus of, in addition to the downlink data, broadcast information (system information), which is not notified by paging or the physical broadcast channel, as the layer 3 message. Radio resource allocation information of the physical downlink shared channel is indicated by the physical downlink control channel. The physical downlink shared channel is arranged and transmitted in the OFDM symbol other than in the OFDM symbol in which the physical downlink control channel is transmitted. That is, the physical downlink shared channel and the physical downlink control channel are subjected to time division multiplexing in one subframe.

A Physical Uplink Shared CHannel (PUSCH) mainly transmits uplink data and uplink control data, and may include control data such as reception quality of downlink and ACK/NACK. Moreover, it is used also for notifying the base station apparatus of uplink control information, in addition to the uplink data, as the layer 3 message from the terminal apparatus. Similarly to the downlink, radio resource allocation information of the physical uplink shared channel is indicated by the physical downlink control channel.

An Uplink Reference Signal (also referred to as an uplink pilot signal or an uplink pilot channel) includes a Demodulation Reference Signal (DMRS) which is used by the base station apparatus for demodulating the Physical Uplink Control CHannel PUCCH and/or the Physical Uplink Shared CHannel PUSCH, and a Sounding Reference Signal (SRS) which is used by the base station apparatus mainly for estimating a channel state of the uplink. As the Sounding Reference Signal, there are a Periodic Sounding Reference Signal (Periodic SRS) which is transmitted periodically and an Aperiodic Sounding Reference Signal (Aperiodic SRS) which is transmitted when an instruction is given from the base station apparatus.

A Physical Random Access Channel (PRACH) is a channel which is used for notifying (configuring) a preamble sequence and has a guard time. The preamble sequence is configured so as to notify the base station apparatus of information by a plurality of sequences. For example, when sixty-four types of sequences are prepared, it is possible to indicate 6-bit information to the base station apparatus. The physical random access channel is used as access means to the base station apparatus from the terminal apparatus.

The terminal apparatus uses the physical random access channel, for example, for making a radio resource request of the uplink when the physical uplink control channel is not configured, or requesting the base station apparatus for transmission timing adjustment information (also called Timing Advance (TA)) which is required for aligning an uplink transmission timing to a reception timing window of the base station apparatus. Moreover, the base station apparatus may request the terminal apparatus to initiate random access procedure by using the physical downlink control channel.

Note that, since physical channels or physical signals other than described above are not related to each embodiment of the invention, detailed description thereof will be omitted. Examples of the physical channels or the physical signals whose description will be omitted include a Physical Control Format Indicator CHannel (PCFICH), a Physical HARQ Indicator CHannel (PHICH: Physical Hybrid ARQ Indicator CHannel), and a Physical Multicast CHannel (PMCH).

### [Radio network]

A communication available range (communication area) of each frequency which is controlled by the base station apparatus is regarded as a cell. In this case, communication areas covered by the base station apparatus may have different areas and different shapes for respective frequencies. Moreover, an area covered by the base station apparatus may be different for each frequency.

The terminal apparatus operates by regarding inside of a cell as a communication area. When the terminal apparatus moves from a certain cell to another cell, the terminal apparatus moves to another suitable cell by cell re-selection procedure during non-radio connection (also referred to as not under radio connection, idle state, or RRC_IDLE state) or by handover procedure during radio connection (also referred to as under radio connection, connected state, or RRC_CONNECTED state). The suitable cell is generally determined as a cell to which access of the terminal apparatus is not prohibited based on information specified from the base station apparatus, and in which reception quality of the downlink fulfills a prescribed condition.

When the terminal apparatus is able to communicate with a certain base station apparatus, a cell which is configured so as to be used for communication with the terminal apparatus is a serving cell and other cells which are not used for the communication are referred to as neighboring cells among cells of the base station apparatus.

### [Radio protocol architecture]

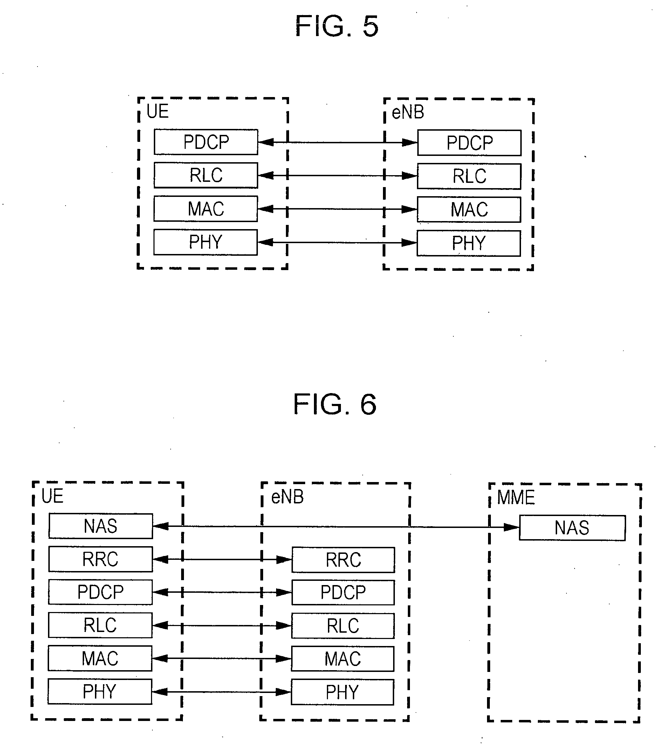

Fig. 5 illustrates a User-plane (UP (U-Plane)) protocol stack handling user data of a terminal apparatus and a base station apparatus in a radio network (EUTRAN) of EUTRA. Fig. 6 illustrates a Control-plane (CP (C-Plane)) protocol stack handling control data.

In Fig. 5 and Fig. 6, a Physical layer (PHY layer) provides a transmission service to a higher layer by using a Physical Channel. The PHY layer is connected to a higher Medium Access Control layer (MAC layer) through a transport channel. Data is transferred between layers of the MAC layer and the PHY layer through the transport channel. Data transmission and reception between the respective PHY layers of the terminal apparatus and the base station apparatus is performed through the physical channel.

The MAC layer performs mapping of various logical channels to various transport channels. The MAC layer is connected to a higher Radio Link Control layer (RLC layer) by a logical channel. The logical channel is roughly divided according to a type of transmitted information, i.e., divided into a control channel that transmits control information and a traffic channel that transmits user information. The MAC layer has a function of performing control of the PHY layer in order to perform discontinuous reception and transmission (DRX/DTX), a function of executing random access procedure, a function of notifying information of transmit power, a function of performing HARQ control, and the like.

The RLC layer performs segmentation and connection of data received from a higher layer to adjust a data size so that a lower layer is able to suitably transmit the data. The RLC layer also has a function of guaranteeing QoS (Quality of Service) requested by each data. That is, the RLC layer has a function of controlling retransmission of data, and the like.

A Packet Data Convergence Protocol layer (PDCP layer) has a header compression function of performing compression of unnecessary control information in order to effectively transmit an IP packet which is user data in a radio section. The PDCP layer also has a function of encrypting data.

Further, the Control-plane protocol stack has a Radio Resource Control layer (RRC layer). The RRC layer performs configuration and reconfiguration of a Radio Bearer (RB) and performs control of the logical channel, the transport channel, and the physical channel. The RB is classified into a Signaling Radio Bearer (SRB) and a Data Radio Bearer (DRB), and the SRB is used as a path for transmitting an RRC message which is control information. The DBR is used as a path for transmitting user data. Configuration of each RB is performed between the respective RRC layers of the base station apparatus and the terminal apparatus.

Note that, the PHY layer corresponds to a physical layer of the first layer in a hierarchy structure of a generally-known Open Systems Interconnection (OSI) model, the MAC layer, the RLC layer, and the PDCP layer correspond to a data link layer as the second layer of the OSI model, and the RRC layer corresponds to a network layer as the third layer of the OSI model.

A signaling protocol used between a network and the terminal apparatus is divided into an Access Stratum (AS) protocol and a Non-Access Stratum (NAS) protocol. For example, a protocol of the RRC layer or lower is the Access Stratum protocol used between the terminal apparatus and the base station apparatus. A protocol for Connection Management (CM) of the terminal apparatus, Mobility Management (MM), and the like is the Non-Access Stratum protocol and is used between the terminal apparatus and a Core Network (CN). For example, as illustrated in Fig. 6, communication with use of the Non-Access Stratum protocol is performed transparently between the terminal apparatus and Mobility Management entity (MME) through the base station apparatus.

### [Paging message]

A paging message is used for transmitting information from a network to a terminal apparatus in an idle state, notifying a terminal apparatus in an idle state or a connected state of change of System Information (SI, (system information block (SIB)), notifying ETWS or CMAS, and the like. Specifically, the paging message which is one of RRC messages includes a paging record list, and each paging record of the paging record list includes an identifier and CN domain information (PS or CS) of a terminal apparatus. When the paging record list includes an identifier configured by the NAS function of the terminal apparatus, the terminal apparatus in the idle state transfers the identifier and the CN domain information to the NAS function.

### [EPS bearer and Radio Bearer (RB)]

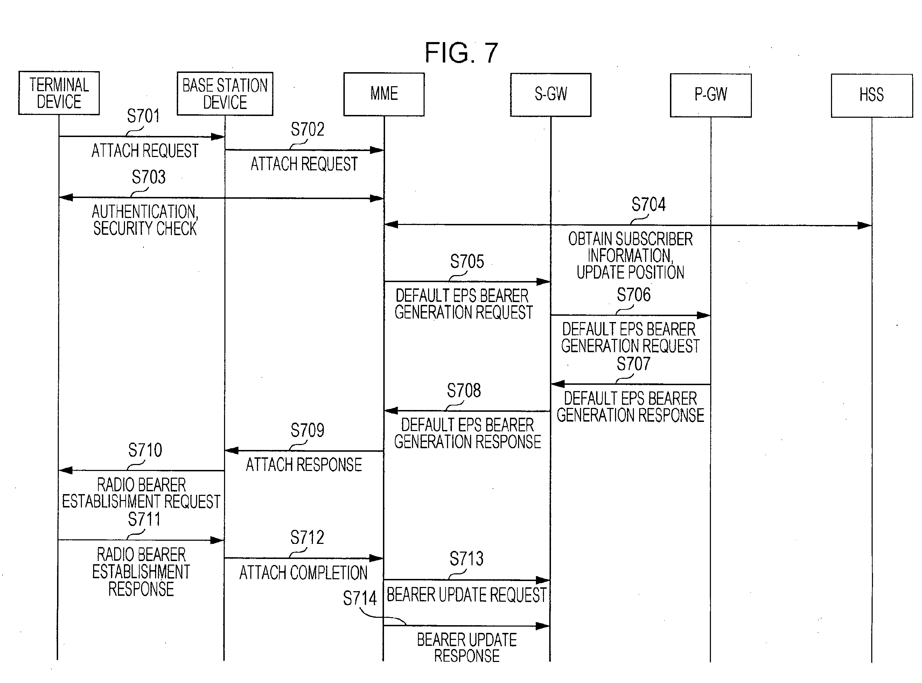

In a system of the EUTRA, while a terminal apparatus is registered (position registration) in a network (HSS), default Evolved Packet System bearers are established between the terminal apparatus and a base station apparatus and between the base station apparatus and MME. That is, with initial position registration (attach) processing performed, for example, when the terminal apparatus is turned on, processing for establishing a default EPS bearer is performed. The attach processing will be described below with reference to Fig. 7.

The terminal apparatus transmits an attach message to the base station apparatus to perform attach processing at step S701. The base station apparatus performs MME selection processing or the like to determine the MME to be accessed, and then transfers the attach message to the MME at step S702.

The MME performs authentication and security check such as a check of an identifier of the terminal apparatus and authentication of IMSI at step S703. The MME obtains subscriber information with respect to the HSS, and, when the MME is changed after the previous detachment, the MME performs position update processing for the HSS at step S704.

At step S705, the MME selects a Serving Gateway (S-GW) and allocates, for example, an identifier of the default EPS bearer associated with the terminal apparatus, and then transmits a default EPS bearer generation request to the selected S-GW. The S-GW performs, for example, update processing of an EPS bearer management table, and then transmits the default EPS bearer generation request to a PDN Gateway (P-GW) at step S706.

The P-GW transmits a default EPS bearer generation response to the S-GW at step S707. The S-GW transmits the default EPS bearer generation response to the MME at step S708. At step S709, the MME transmits to the base station apparatus an attach response together with information needed for establishing EPS bearer context.

The base station apparatus transmits a radio bearer establishment request to UE at step S710. In this case, the base station apparatus includes an attach response message received from the MME in a radio bearer establishment request message and transmits the radio bearer establishment request message including the attach response message. Note that, the radio bearer establishment request and the attach response may be transmitted separately.

The terminal apparatus transmits the radio bearer establishment response to the base station apparatus at step S711. Thereby, a radio bearer is established between the terminal apparatus and the base station apparatus.

At step S712, the base station apparatus transfers an attach completion notification message to the MME. In this case, the base station apparatus includes the attach completion notification message in response to the attach response message received from the MME in a radio bearer establishment response message and transmits the radio bearer establishment response message including the attach completion notification message. Thereby, a bearer is established between the terminal apparatus and the MME. Note that, the radio bearer establishment response and the attach completion notification may be transmitted separately.

The MME transmits a bearer update request to the S-GW at step S713. The S-GW transmits a bearer update response to the MME at step S714.

In this manner, the procedure of establishing the default EPS bearer is executed simultaneously with the procedure of position registration and the default EPS bearer is associated with the radio bearer. There is "RadioResourceConfigDedicated" as an RRC message for associating the EPS bearer with the radio bearer, and by "drb-ToAddModList" included in this message, an identifier of the EPS bearer corresponding to information of DRB (such as an identifier of the DRB, configuration of a PDCP layer, configuration of an RLC layer, and allocation of a logical channel) is notified to the terminal apparatus.

Note that, while position registration of the terminal apparatus is performed in the MME, the default EPS bearer is valid (being established) even during non-radio connection, but the radio bearer is released during non-radio connection. Thus, when the terminal apparatus in the non-radio connection is subjected to radio connection, allocation of the radio bearer is performed again.

### [Access class]

In a mobile communication system prescribed in the 3GPP, each terminal apparatus has any one of access classes (ACs) 0 to 9. The access classes are typically saved in a SIM (USIM) in which contractor information is saved.

Some special terminal apparatuses for network operators, the police, government officials, and the like may have ACs 11 to 15. Note that, the AC 10 is an AC used for an emergency call and is an AC which is not held by the terminal apparatus and used, for example, for calling 110 or 119 (in Japan).

### [Access control (access barring)]

In the EUTRA, a terminal apparatus is configured so as to determine whether or not initiation is able to be performed in accordance with a type of calling, such as an incoming response call, an emergency call, an initiating a call (calling), and a signaling call or in accordance with an access class to which the terminal apparatus belongs or barring information included in broadcast information.

Specifically, SIB2 (SystemInformationBlockType2) which is broadcast information includes, as access barring information, "ac-BarringForMO-Data" for barring access from the terminal apparatus and "ac-BarringForMO-Signaling" for barring transmission of control signaling from the terminal apparatus, each of which includes, as parameters, ac-BarringFactor, ac-BarringTime, and ac-BarringForSpecialAC described below. The ac-BarringFactor is a parameter indicating possibility that the terminal apparatus will successfully perform communication, and currently has values from 0 to 0.95 with 0.05 increment configured. The terminal apparatus is allowed to perform communication when a value of a random number (which is equal to or more than 0 and less than 1) generated by the terminal apparatus is less than the value of the ac-BarringFactor, and is prohibited to perform access during a period configured based on a value of the ac-BarringTime when the value of a random number is equal to or more than the value of the ac-BarringFactor. Further, 5-bit information indicating whether or not a terminal apparatus having a special access class (AC 11 to 15) is a target of corresponding access barring is configured to the ac-BarringForSpecialAC.

The SIB2 includes "ssac-BarringForMMTEL-Voice-r9" and "ssac-BarringForMMTEL-Video-r9" for performing access barring with an IMS/MMTEL function, and "ac-BarringForCSFB-r10" for access barring used for CSFB, and has parameters similar to the above. Moreover, SIB 14 includes "eab-Param-r11" for access barring used for MTC, and has 10-bit information indicating access of which access class (AC 0 to 9) to be prohibited against eab-BarringBitmap-r11 configured as a parameter.

For an AS function, as a timer for counting the time period during which the aforementioned access is prohibited, a timer for prohibiting a call from the terminal apparatus (T303), a timer for prohibiting signaling from the terminal apparatus (T305), and a timer for prohibiting a call from the CSFB from the terminal apparatus (T306) are used. That is, in an access barring check with the AS function, it is regarded that access barring is underway in a case where T302 or each of the aforementioned timers is running. When no timer is running, barring based on the access barring information is checked, and when access barring is underway, a period configured based on the value of the ac-BarringTime is configured as a period during which access is prohibited (Tbarring) to any of the timers based on a type of transmission data. When rejection is performed by the base station apparatus when RRC connection is established, an access prohibited period (waitTime) included in an RRCConnectionReject message is configured to the timer T302 to count the time. Based on running states (whether or not to be running) of the timers, an access barring state of the terminal apparatus to the network is judged.

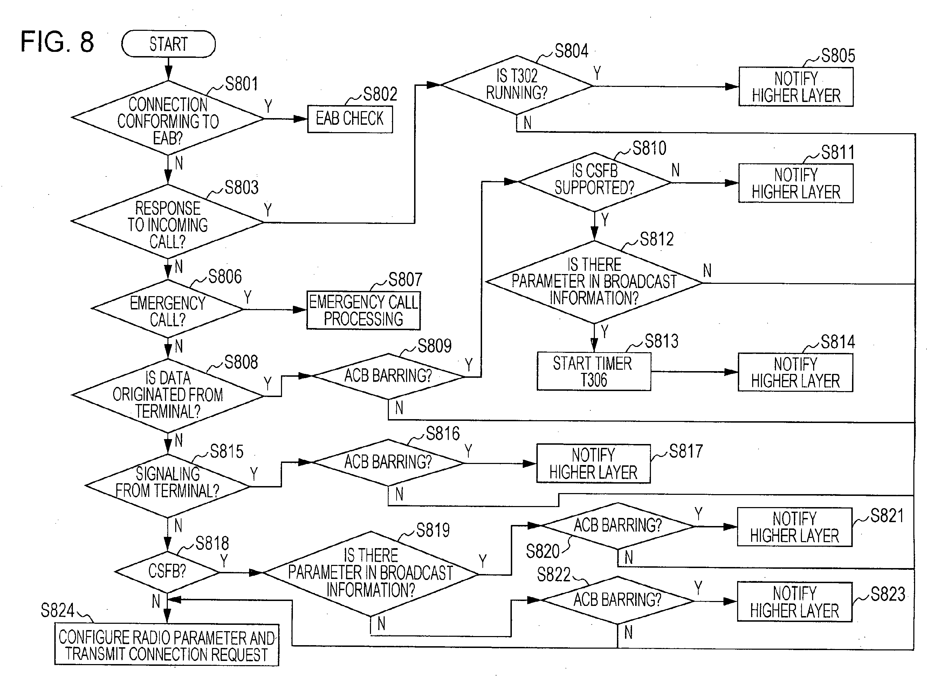

Apart of procedure in the case of RRC connection establishment by a conventional terminal apparatus will be described below with reference to a flowchart of Fig. 8.

The AS function of the terminal apparatus in an idle state initiates the procedure of RRC connection establishment based on a request from a higher layer. The terminal apparatus judges whether setting up (establishment) of RRC connection is access (access of MTC) conforming to EAB (Extended Access Barring) (step S801), and in the case of the access conforming to the EAB, performs an access barring check based on access barring information related to the EAB included in SIB 14, and when access of an access class of the terminal apparatus is barred, notifies the higher layer that the barring is underway and the establishment fails (step S802).

Then, the terminal apparatus judges whether setting up of the RRC connection is for an incoming response call (step S803), and in the case of being for an incoming response call, judges whether or not the timer T302 is running (step S804). When the timer T302 is running, the terminal apparatus notifies the higher layer that barring is underway and establishment fails (step S805). When the timer T302 is not running at step S804, the procedure shifts to step S824.

Next, the terminal apparatus judges whether setting up of the RRC connection is for an emergency call (step S806), and in the case of being for an emergency call, when a value of ac-BarringForEmergency included in SIB2 is true, the terminal apparatus judges that access barring is underway if the terminal apparatus does not have access classes 11 to 15, and judges whether or not access barring is underway based on ac-BarringForSpecialAC if the terminal apparatus has any of access classes 11 to 15. When judging that access barring is underway, the terminal apparatus notifies the higher layer that establishment fails (step S807).

Next, the terminal apparatus judges whether setting up of the RRC connection is for a call from the terminal apparatus (S808), and in the case of a call from the terminal apparatus, performs an access barring check based on ac-BarringForMO-Data included in SIB2 and the running state of the timer T303 (step S809), and when access barring is not underway, the procedure shifts to step S824. When access barring is underway, the terminal apparatus judges whether the terminal apparatus is a terminal supporting the CSFB (step S810), and when being not a terminal supporting the CSFB, initiates counting by the timer T303 and notifies the higher layer that barring is underway and that establishment fails (step S811). When the terminal apparatus is a terminal supporting the CSFB at step S810, the terminal apparatus judges whether ac-BarringForCSFB is included in the SIB2 (step S812), and when being not included, the procedure shifts to step S824. When the ac-BarringForCSFB is included in the SIB2 at step S810, the terminal apparatus configures a value of the timer T303 to the timer T306, initiates counting of the timer T306 (step S813), and notifies the higher layer that barring is underway and that establishment fails (step S814).

Then, the terminal apparatus judges whether setting up of the RRC connection is for a signaling call from the terminal apparatus (S815), and in the case of a signaling call from the terminal apparatus, performs an access barring check based on ac-BarringForMO-Signaling included in the SIB2 (step S816), and when access barring is not underway, the procedure shifts to step S824. When access barring is underway, the terminal apparatus initiates counting of the timer T305, and notifies the higher layer that barring is performed and that establishment fails (step S817).

Further, the terminal apparatus judges whether setting up of the RRC connection is for CSFB from the terminal apparatus (S818), and in the case of CSFB from the terminal apparatus, judges whether ac-BarringForCSFB is included in the SIB2 (step S819), and when being included, performs an access barring check based on the ac-BarringForCSFB (step S820), and when access barring is not underway, the procedure shifts to step S824. When access barring is underway, the terminal apparatus initiates counting of the timer T306, and notifies the higher layer that barring is underway and that establishment fails (step S821). When the ac-BarringForCSFB is not included in the SIB2 at step S819, the terminal apparatus performs an access barring check based on the ac-BarringForMO-Data included in the SIB2 (step S822), and when access barring is not underway, the procedure shifts to step S824. When access barring is underway, the terminal apparatus configures a value of the timer T306 to initiate counting, and when the timer T303 is not running, configures the value of the T306 to T303 to initiate counting, and notifies the higher layer that barring is underway and that establishment fails (step S823).

At step S824, the terminal apparatus performs configurations of a physical channel and a MAC layer, and transmits an RRCConnectionRequest message to the base station apparatus. Though description for processing after transmission of the RRCConnectionRequest message will be omitted, the aforementioned processing makes it possible to perform access control based on a congestion state of the network, for example.

The timers T303, T305, and the T306 which are running stop when the terminal apparatus is brought into a connected state or performs reselection of a cell.

When counting of the aforementioned timers T303, T305, and the T306 expires or stops and the timer T302 is not running, the terminal apparatus notifies the higher layer that barring is alleviated.

Hereinafter, appropriate embodiments of the invention will be described in detail with reference to the attached drawings while taking the above description into consideration. Note that, in the description of the embodiments of the invention, in a case where it is determined that a specific description with respect to a known function or configuration relating to the embodiments of the invention makes the gist of the embodiments of the invention ambiguous, the detailed description thereof will be omitted.

### <First embodiment>

A first embodiment of the invention will be described below.

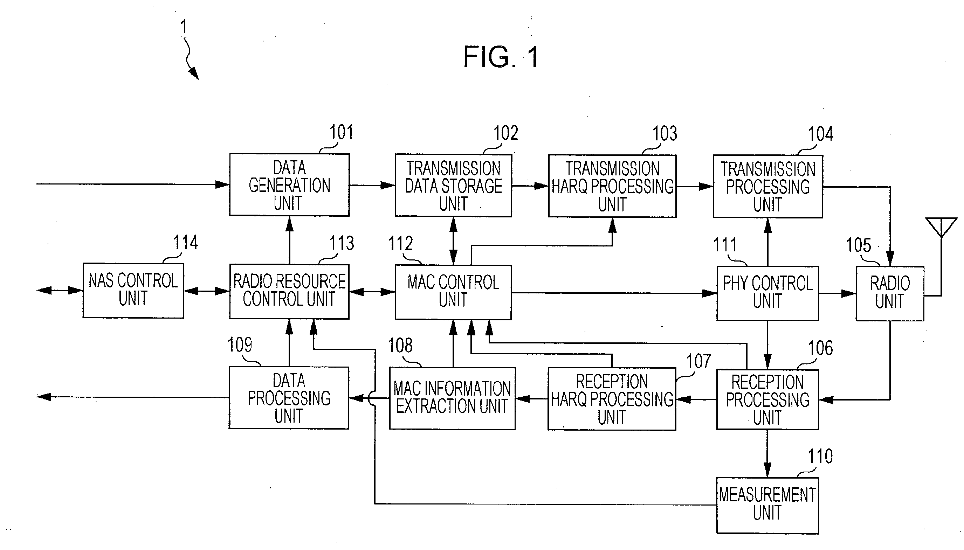

Fig. 1 is a block diagram illustrating an example of a terminal apparatus 1 according to the first embodiment of the invention. In Fig. 1, the terminal apparatus 1 is configured by a data generation unit 101, a transmission data storage unit 102, a transmission HARQ processing unit 103, a transmission processing unit 104, a radio unit 105, a reception processing unit 106, a reception HARQ processing unit 107, a MAC information extraction unit 108, a data processing unit 109, a measurement unit 110, a PHY control unit 111, a MAC control unit 112, a radio resource control unit 113, and a NAS control unit 114.

User data from a higher layer and control data from the radio resource control unit 113 are input to the data generation unit 101. The data generation unit 101 has functions of a PDCP layer and an RLC layer. The data generation unit 101 performs processing of header compression of an IP packet of user data, encryption of data, division and combining of data, or the like to adjust a data size. The data generation unit 101 outputs the processed data to the transmission data storage unit 102.

The transmission data storage unit 102 accumulates therein the data input from the data generation unit 101 and outputs data instructed based on an instruction from the MAC control unit 112 by an instructed amount of data to the transmission HARQ processing unit 103. The transmission data storage unit 102 outputs information of a data mount of the accumulated data to the MAC control unit 112.

The transmission HARQ processing unit 103 performs coding of the input data and performs puncture processing for the coded data. Then, the transmission HARQ processing unit 103 outputs the punctured data to the transmission processing unit 104 and saves the coded data. When an instruction to retransmit data is given from the MAC control unit 112, the transmission HARQ processing unit 103 performs puncturing processing different from the puncturing performed in the previous time for the coded data which is saved (buffered), and outputs the punctured data to the transmission processing unit 104. When an instruction to delete data is given from the MAC control unit 112, the transmission HARQ processing unit 103 deletes data corresponding to a specified cell.

The transmission processing unit 104 performs modulation and coding for the data input from the transmission HARQ processing unit 103. The transmission processing unit 104 performs DFT (Discrete Fourier Transform)-IFFT (Inverse Fast Fourier Transform) processing for the modulated and coded data, and after the processing, inserts CP (Cyclic prefix), arranges the data after the CP insertion in a Physical Uplink Shared CHannel (PUSCH) of each component carrier (cell) of the uplink, and outputs the resultant to the radio unit 105.

When a response instruction of received data is given from the PHY control unit 111, the transmission processing unit 104 generates an ACK or NACK signal, arranges the generated signal in the Physical Uplink Control CHannel (PUCCH), and outputs the resultant to the radio unit 105. When a transmission instruction of a random access preamble is given from the PHY control unit 111, the transmission processing unit 104 generates a random access preamble, arranges the generated signal in Physical Random Access CHannel PRACH, and outputs the resultant to the radio unit 105.

The radio unit 105 up-converts the data input from the transmission processing unit 104 to radio frequency of transmission position information (transmission cell information) instructed from the PHY control unit 111, and adjusts transmit power to transmit the data from a transmit antenna. The radio unit 105 down-converts a radio signal received by a receive antenna, and outputs the resultant to the reception processing unit 106. The radio unit 105 configures transmission timing information received from the PHY control unit 111 as a transmission timing of the uplink.

The reception processing unit 106 performs FFT (Fast Fourier Transform) processing, decoding, demodulation processing, and the like for the signal input from the radio unit 105. The reception processing unit 106 performs demodulation of the Physical Downlink Control CHannel PDCCH or the Enhanced Physical Downlink Control CHannel EPDCCH, and when detecting downlink allocation information of the terminal apparatus 1, performs demodulation of the Physical Downlink Shared CHannel PDSCH based on the downlink allocation information, and outputs to the MAC control unit 112 that the downlink allocation information is obtained.

The reception processing unit 106 outputs the demodulated data of the Physical Downlink Shared Channel PDSCH to the reception HARQ processing unit 107. The reception processing unit 106 performs demodulation of the Physical Downlink Control CHannel PDCCH or the Enhanced Physical Downlink Control CHannel EPDCCH, and when detecting uplink transmission grant information (Uplink grant) and response information of uplink transmission data (ACK/NACK), outputs the obtained response information to the MAC control unit 112. Note that, as the uplink transmission grant information, there are modulation and coding schemes of data, data size information, HARQ information, transmission position information, and the like.

The reception HARQ processing unit 107 performs decoding processing for the data input from the reception processing unit 106, and when performing the decoding processing successfully, outputs the data to the MAC information extraction unit 108. When failing in the decoding processing of the input data, the reception HARQ processing unit 107 saves the data for which the decoding processing has failed. When receiving retransmission data, the reception HARQ processing unit 107 combines the saved data and the retransmission data and performs decoding processing. The reception HARQ processing unit 107 notifies the MAC control unit 112 of success/failure of the decoding processing of the input data.

The MAC information extraction unit 108 extracts control data of a MAC layer (Medium Access Control layer) from the data input from the reception HARQ processing unit 107, and outputs the extracted MAC control information to the MAC control unit 112. The MAC information extraction unit 108 outputs the other data to the data processing unit 109. The data processing unit 109 has functions of a PDCP layer and an RLC layer, performs processing of a function of expanding (decompressing) a compressed IP header, a function of decoding encrypted data, division and combining of data, or the like to restore the data to its original state. The data processing unit 109 divides the data into an RRC message and user data, and outputs the RRC message to the radio resource control unit 113 and outputs the user data to a higher layer.

The measurement unit 110 measures receive power (RSRP) and reception quality (RSRQ) of a serving cell and a neighbor cell by using downlink reference signal and a synchronization signal subjected to the FFT processing by the reception processing unit 106, and outputs a measurement result to the radio resource control unit 113.

The PHY control unit 111 controls the transmission processing unit 104, the radio unit 105, and the reception processing unit 106 based on an instruction from the MAC control unit 112. The PHY control unit 111 notifies the transmission processing unit 104 of modulation and coding schemes and a transmission position based on modulation and coding schemes notified from the MAC control unit 112, transmit power information, and transmission position information (transmission cell information), and notifies the radio unit 105 of frequency information and the transmit power information of a transmission cell.

The MAC control unit 112 has a function of a MAC layer, and performs control of the MAC layer based on information obtained from the radio resource control unit 113 or a lower layer. The MAC control unit 112 determines a data transmission destination and a data transmission priority based on a data transmission control configuration specified by the radio resource control unit 113, the data amount information obtained from the transmission data storage unit 102, and the uplink transmission grant information obtained from the reception processing unit 106, and notifies the transmission data storage unit 102 of information about data to be transmitted. In addition, the MAC control unit 112 notifies the transmission HARQ processing unit 103 of HARQ information, and outputs modulation and coding schemes to the PHY control unit 111.

The MAC control unit 112 obtains response information to uplink transmission data from the reception processing unit 106, and when the response information indicates NACK (negative acknowledgement response), instructs retransmission to the transmission HARQ processing unit 103 and the PHY control unit 111. When obtaining success/failure information of decoding processing of data from the reception HARQ processing unit 107, the MAC control unit 112 instructs the PHY control unit 111 to transmit an ACK or NACK signal.

The radio resource control unit 113 performs various configurations for communicating with a base station apparatus 2, such as connection/disconnection processing with the base station apparatus 2, and data transmission control configurations of control data and user data. In addition, the radio resource control unit 113 exchanges information with the NAS control unit 114, which is associated with the various configurations, and performs control of a lower layer, which is associated with the various configurations.

The radio resource control unit 113 creates an RRC message and outputs the created RRC message to the data generation unit 101. The radio resource control unit 113 analyzes the RRC message input from the data processing unit 109.

In addition, the radio resource control unit 113 outputs information needed for the MAC layer to the MAC control unit 112, and outputs information needed for the physical layer to the PHY control unit 111.

The radio resource control unit 113 creates an RRC message including data of a Non-Access Stratum protocol (NAS message) input from the NAS control unit 114, and outputs the created RRC message to the data generation unit 101. When the RRC message input from the data processing unit 109 includes data of a Non-Access Stratum protocol, the radio resource control unit 113 outputs this data to the NAS control unit 114.

Further, the radio resource control unit 113 analyzes the RRC message input from the data processing unit 109, and obtains information indicating necessity/unnecessity of access barring processing with the AS function (barring skip information).

The radio resource control unit 113 analyzes the RRC message input from the data processing unit 109, and when the RRC message includes access barring information of each EPS bearer, outputs this data to the NAS control unit 114.

In a case where an establishment cause (EstablishmentCause) which is specified from the NAS control unit 114 and which is included in an RRC connection request message when radio connection is established is a predefined cause and the access barring processing with the AS function is configured to be unnecessary by the barring skip information, the radio resource control unit 113 skips processing of access barring in calling.

The NAS control unit 114 outputs the data of the Non-Access Stratum protocol to be transmitted to MME to the radio resource control unit 113. The data of the Non-Access Stratum protocol received from the MME is input to the NAS control unit 114 through the radio resource control unit 113.

In addition, the NAS control unit 114 allocates, to an EPS bearer, user data to be transmitted based on information (packet filter information) indicating which EPS bearer is to be used by user data transmitted by the terminal apparatus 1.

When the terminal apparatus 1 initiates a call, the NAS control unit 114 configures an establishment cause (EstablishmentCause included in the RRC connection request) based on information whether or not access control with the AS function is needed, and notifies the radio resource control unit 113 of the establishment cause.

When the terminal apparatus 1 initiates a call, the NAS control unit 114 may select an EPS bearer to be used based on the packet filter information, and configure that an establishment cause for establishing radio connection (EstablishmentCause included in the RRC connection request) is transmission for a normal call, and notify the radio resource control unit 113 of the establishment cause.

Note that, the transmission processing unit 104, the radio unit 105, the reception processing unit 106, and the PHY control unit 111 perform operations of the physical layer, the transmission data storage unit 102, the transmission HARQ processing unit 103, the reception HARQ processing unit 107, the MAC information extraction unit 108, and the MAC control unit 112 perform operations of the MAC layer, the data generation unit 101 and the data processing unit 109 perform operations of the RLC layer and the PDCP layer, and the radio resource control unit 113 performs operations of the RRC layer.

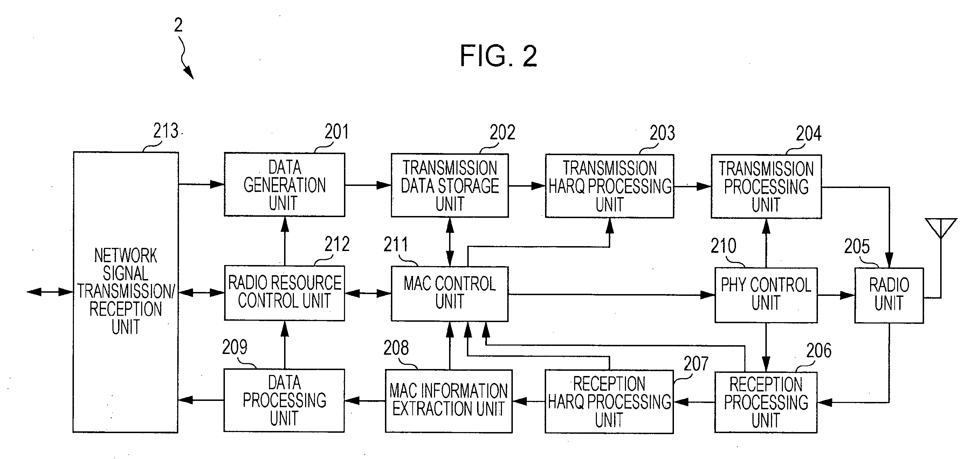

Fig. 2 illustrates an example of a configuration of the base station apparatus according to the embodiment of the invention. The base station apparatus 2 is configured by a data generation unit 201, a transmission data storage unit 202, a transmission HARQ processing unit 203, a transmission processing unit 204, a radio nit 205, a reception processing unit 206, a reception HARQ processing unit 207, a MAC information extraction unit 208, a data processing unit 209, a PHY control unit 210, a MAC control unit 211, a radio resource control unit 212, and a network signal transmission/reception unit 213.

User data from the network signal transmission/reception unit 213 and control data from the radio resource control unit 212 are input to the data generation unit 201. The data generation unit 201 has functions of a PDCP layer and an RLC layer, and performs processing of header compression of an IP packet of the user data, encryption of data, division and combining of data, or the like to adjust a data size. The data generation unit 201 outputs the processed data and logical channel information of the data to the transmission data storage unit 202.

The transmission data storage unit 202 accumulates therein data, input from the data generation unit 201, for each user and outputs data instructed based on an instruction from the MAC control unit 211 by an instructed amount of data to the transmission HARQ processing unit 203. The transmission data storage unit 202 outputs information of a data amount of the accumulated data to the MAC control unit 211.

The transmission HARQ processing unit 203 performs coding of the input data and performs puncturing processing for the coded data. Then, the transmission HARQ processing unit 203 outputs the punctured data to the transmission processing unit 204 and saves the coded data. When being instructed to retransmit data from the MAC control unit 211, the transmission HARQ processing unit 203 performs puncturing processing different from the puncturing performed in the previous time for the coded data which is saved, and outputs the punctured data to the transmission processing unit 204.

The transmission processing unit 204 performs modulation and coding for the data input from the transmission HARQ processing unit 203. The transmission processing unit 204 performs mapping of the modulated and coded data into each signal and each channel such as a Physical Downlink Control CHannel PDCCH, a downlink synchronization signal, a Physical Broadcast CHannel PBCH, and a Physical Downlink Shared CHannel PDSCH, and performs OFDM signal processing such as serial/parallel conversion, IFFT (Inverse Fast Fourier Transform) conversion, and CP insertion for the data subjected to mapping to generate an OFDM signal.

Then, the transmission processing unit 204 outputs the generated OFDM signal to the radio unit 205. When a response instruction of received data is given from the MAC control unit 211, the transmission processing unit 204 generates an ACK or NACK signal, arranges the generated signal in the Physical Downlink Control CHannel PDCCH, and outputs the resultant signal to the radio unit 205.

The radio unit 205 up-converts the data input from the transmission processing unit 204 to radio frequency, and adjusts transmit power to transmit data from a transmit antenna. The radio unit 205 down-converts a radio signal received by a receive antenna, and outputs the resultant signal to the reception processing unit 206. The reception processing unit 206 performs FFT (Fast Fourier Transform) processing, decoding, demodulation processing, and the like for the signal input from the radio unit 205.

The reception processing unit 206 outputs data of the Physical Uplink Shared CHannel PUSCH among demodulated data to the reception HARQ processing unit 207. In addition, the reception processing unit 206 outputs, to the MAC control unit 211, response information (ACK/NACK) of downlink transmission data, downlink radio quality information (CQI), and uplink transmission request information (scheduling request) of the control data obtained from the Physical Uplink Control CHannel PUCCH among the demodulated data.

When detecting a random access preamble, the reception processing unit 206 calculates a transmission timing from the detected random access preamble, and outputs a number of the detected random access preamble and the calculated transmission timing to the MAC control unit 211. The reception processing unit 206 calculates a transmission timing from an uplink reference signal and outputs the calculated transmission timing to the MAC control unit 211.

The reception HARQ processing unit 207 performs decoding processing for the data input from the reception processing unit 206, and when performing the decoding processing successfully, outputs the data to the MAC information extraction unit 208. When failing in the decoding processing of the input data, the reception HARQ processing unit 207 saves the data for which the decoding processing has failed. When receiving retransmission data, the reception HARQ processing unit 207 combines the saved data and the retransmission data and performs decoding processing. The reception HARQ processing unit 207 notifies the MAC control unit 211 of success/failure of the decoding processing of the input data. When an instruction to delete data is given from the MAC control unit 211, the transmission HARQ processing unit 207 deletes data corresponding to a specified cell.

The MAC information extraction unit 208 extracts control data of a MAC layer from the data input from the reception HARQ processing unit 207, and outputs the extracted control information to the MAC control unit 211. The MAC information extraction unit 208 outputs the other data to the data processing unit 209. The data processing unit 209 has functions of a PDCP layer and an RLC layer, performs processing of a function of expanding (decompressing) a compressed IP header, a function of decoding encrypted data, division and combining of data, or the like to restore the data to its original state. The data processing unit 209 divides the data into an RRC message and user data, and outputs the RRC message to the radio resource control unit 212 and outputs the user data to the network signal transmission/reception unit 213.

The MAC control unit 211 has a function of a MAC layer, and performs control of the MAC layer based on information obtained from the radio resource control unit 212 or a lower layer. The MAC control unit 211 performs scheduling processing of the downlink and the uplink.

The MAC control unit 211 obtains response information to uplink transmission data from the reception processing unit 206, and when the response information indicates NACK (negative acknowledgement response), instructs retransmission to the transmission HARQ processing unit 203 and the transmission processing unit 204. When obtaining success/failure information of decoding processing of data from the reception HARQ processing unit 207, the MAC control unit 211 instructs the transmission processing unit 204 to transmit an ACK or NACK signal.

The radio resource control unit 212 performs various configurations for communicating with the terminal apparatus 1, such as connection/disconnection processing with the terminal apparatus 1, and data transmission control configurations of control data and user data, exchanges information with a higher layer, which is associated with the various configurations, through the network signal transmission/reception unit 213 or the like, and performs control of a lower layer, which is associated with the various configurations.

The radio resource control unit 212 creates various RRC messages and outputs the created RRC messages to the data generation unit 201. The radio resource control unit 212 analyzes the RRC messages input from the data processing unit 209.

In addition, the radio resource control unit 212 outputs information needed for the MAC layer to the MAC control unit 211, and outputs information needed for the physical layer to the PHY control unit 210. When performing handover, the radio resource control unit 212 notifies the network signal transmission/reception unit 213 of necessary information.

The radio resource control unit 212 creates an RRC message which includes a NAS message to the terminal apparatus 1 input from the network signal transmission/reception unit 213, and outputs the created RRC message to the data generation unit 201. When the RRC message input from the data processing unit 209 includes data of a Non-Access Stratum protocol, the radio resource control unit 212 outputs this data to the network signal transmission/reception unit 213.

In addition, the radio resource control unit 212 creates an RRC message in which broadcast information includes information (barring skip information) indicating necessity/unnecessity of access barring processing with the AS function in the terminal apparatus 1, and outputs the created RRC message to the data generation unit 201.

The radio resource control unit 212 creates an RRC message including access barring information of each EPS bearer based on information about access barring of each EPS bearer input from the network signal transmission/reception unit 213, and outputs the created RRC message to the data generation unit 201.

The network signal transmission/reception unit 213 communicates with a different base station apparatus 2 and transmits a control message between the base station apparatuses, which is input from the radio resource control unit 212, to the different base station apparatus 2. The network signal transmission/reception unit 213 receives the control message between the base station apparatuses from the different base station apparatus 2, and outputs the received control message to the radio resource control unit 212. As the control message between the base station apparatuses, there is a control massage of handover or the like.

The network signal transmission/reception unit 213 communicates with MME, and transmits a control message between the base station apparatus and the MME, which is input from the radio resource control unit 212, and a NAS message from the terminal apparatus 1 to the MME. The network signal transmission/reception unit 213 receives the control message between the base station apparatus and the MME and the NAS message to the terminal apparatus 1, and outputs the received control messages to the radio resource control unit 212.

The network signal transmission/reception unit 213 communicates with a gateway (GW), receives user data of the terminal apparatus 1 transmitted from the GW, and outputs the received data to the data generation unit 201. In addition, the network signal transmission/reception unit 213 transmits to the GW user data of the terminal apparatus 1 input from the data transmission unit 209.

Note that, the transmission processing unit 204, the radio unit 205, and the reception processing unit 206 perform operations of the PHY layer, the transmission data storage unit 202, the transmission HARQ processing unit 203, the reception HARQ processing unit 207, the MAC information extraction unit 208, and the MAC control unit 211 perform operations of the MAC layer, the data generation unit 201 and the data processing unit 209 perform operations of the RLC layer and the PDCP layer, and the radio resource control unit 212 performs operations of the RRC layer.

Though components of the different base station apparatus 2 and a transmission path of data (control information) between the components are omitted in Fig. 2, it is apparent that a plurality of blocks having other functions needed for operating as the base station apparatus 2 are included as the components. For example, a Radio Resource Management (RRM) unit and an application layer unit exist above the radio resource control unit 212.

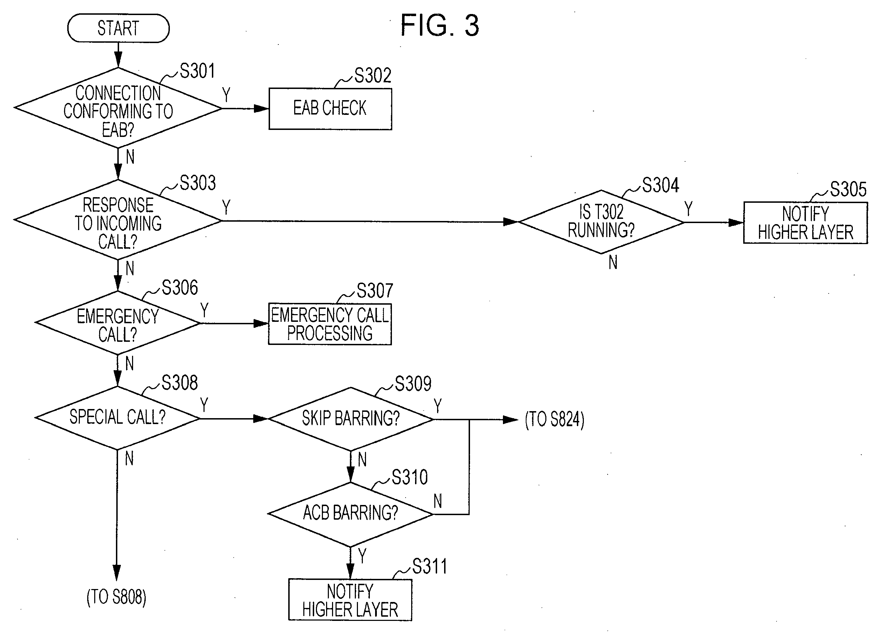

An example of access control in a case where RRC connection is established with the base station apparatus 2 when the terminal apparatus 1 initiates a call will be described with reference to Fig. 3. Note that, detailed description for the operations in common with the procedure in a case where the conventional RRC connection is established, which has been described based on Fig. 8, will be omitted.

First, based on access barring information of each EPS bearer input from the radio resource control unit 113 or information about whether or not data to be transmitted is a specific application or service, the NAS control unit 114 of the terminal apparatus 1 distinguishes whether the data to be transmitted is a normal call or a special call and notifies the radio resource control unit 113 of the result. In this case, the special call means a call skipping a part or all of access barring with the AS function.

In Fig. 3, the AS function of the terminal apparatus 1 in an idle state initiates the procedure of RRC connection establishment based on a request from a higher layer. The terminal apparatus 1 judges whether setting up of RRC connection is access (access of MTC) conforming to EAB (Extended Access Barring) (step S301), and in the case of the access conforming to the EAB, performs an access barring check based on access barring information about the EAB included in SIB 14, and when access of an access class of the terminal apparatus 1 is barred, notifies the higher layer that barring is underway and the establishment fails (step S302).

Then, the terminal apparatus 1 judges whether setting up of the RRC connection is for an incoming response call (step S303), and in the case of being for an incoming response call, judges whether or not the timer T302 is running (step S304). When the timer T302 is running, the terminal apparatus 1 notifies the higher layer that barring is underway and the establishment fails (step S305). When the timer T302 is not running at step S304, processing subsequent to step S824 above of Fig. 8 is performed.

Next, the terminal apparatus 1 judges whether setting up of the RRC connection is for an emergency call (step S306), and in the case of being for an emergency call, when a value of ac-BarringForEmergency included in SIB2 is true, judges that access barring is underway if the terminal apparatus 1 does not have access classes 11 to 15, and judges whether or not access barring is underway based on ac-BarringForSpecialAC if the terminal apparatus 1 has any of access classes 11 to 15. When judging that access barring is underway, the terminal apparatus 1 notifies the higher layer that the establishment fails (step S307).

Next, the terminal apparatus 1 judges whether setting up of the RRC connection is for a special call from the terminal apparatus 1 (S308), and in the case of being not a special call, processing subsequent to step S808 described above of Fig. 8 is performed. In the case of being for a special call, the terminal apparatus 1 judges whether broadcast information of a serving cell (for example, SIB2) includes barring skip information (step S304), and when including the barring skip information, processing subsequent to step S824 above of Fig. 8 is performed. When not including the barring skip information, the terminal apparatus 1 regards a cause for setting up the RRC connection is not a special call but a normal call, and performs an access barring check based on ac-BarringForMO-Data included in the SIB2 and the running state of the timer T303 (step S310), and when access barring is not underway, the procedure shifts to step S824 above of Fig. 8. When access barring is underway, the terminal apparatus 1 notifies the higher layer that access barring is underway and the establishment fails (step S311). Note that, when considering access barring of CSFB, the procedure may shift to step S809 above of Fig. 8 instead of shifting to step S311. Note that, the terminal apparatus 1 may perform the processing of step S308 immediately before any processing of step S301, step S303, and step S306.

In this manner, by recognizing necessity/unnecessity of access barring with the AS function by the NAS control unit and enabling to invalidate access barring with the AS function when RRC connection for a call is established, it is possible to perform control so that priority of a specific application or service (for example, MMTEL) is increased. Further, even when the MME is not able to grasp a congestion status of each base station apparatus 2, it is possible to perform access control more finely based on barring skip information broadcasted by each base station apparatus 2 and access barring information of each EPS bearer.

Note that, though an example in which whether or not barring skip information is included is judged at step S309 above is indicated, without limitation thereto, processing subsequent to step S824 above of Fig. 8 may be performed regardless of presence/absence of barring skip information.

Even when a special call is notified from the NAS control unit 114, it is used only for judgment of whether to be a special call at step S308 above, and an existing normal cause (normal call) may be indicated as a cause for setting up an RRC connection request.

When access barring is underway in the case of a special call, the higher layer may be notified that access barring is underway in a form which allows discrimination from access barring of a normal call.

Though processing for a special call is selected based on barring skip information in the radio resource control unit 113 in the present embodiment, without limitation thereto, it may be configured so that the barring skip information is transferred to the NAS control unit 114, and whether to be a special call or a normal call is selected by the NAS control unit 114 based on the barring skip information, and in the case of a special call at step S308, the radio resource control unit 113 directly performs processing subsequent to step S824 above of Fig. 8.

When access barring is performed also for a special call based on barring skip information in this manner, it is possible to use the same access barring information as that of a normal call and reduce overhead of signaling.

Though an example in which whether or not to perform access barring with the AS function is processed for each EPS bearer based on access barring information of each EPS bearer is indicated in the present embodiment, without limitation thereto, since it is only required that whether data to be transmitted is a normal call of data or special call is able to be distinguished, it may be distinguished based on other elements such as QCI.

### <Second embodiment>

A second embodiment of the invention will be described below.

Description has been given in the first embodiment for an example in which access control is performed by notifying the radio resource control unit 113 of information for distinguishing whether or not to be a call skipping barring in calling. In the present embodiment, an example of access control with another method is indicated.

Since a terminal apparatus 1 and a base station apparatus 2 used in the present embodiment are different from those of the first embodiment only in operations of the NAS control unit 114 and the radio resource control unit 113, detailed description for operations other than the NAS control unit 114 and the radio resource control unit 113 will be omitted.

In the present embodiment, the radio resource control unit 113 performs various configurations for communicating with the base station apparatus 2, such as connection/disconnection processing with the base station apparatus 2, and data transmission control configurations of control data and user data. In addition, the radio resource control unit 113 exchanges information with the NAS control unit 114, which is associated with the various configurations, and performs control of a lower layer, which is associated with the various configurations.

The radio resource control unit 113 creates an RRC message and outputs the created RRC message to the data generation unit 101. The radio resource control unit 113 analyzes the RRC message input from the data processing unit 109.

In addition, the radio resource control unit 113 outputs information needed for the MAC layer to the MAC control unit 112, and outputs information needed for the physical layer to the PHY control unit 111.

The radio resource control unit 113 creates an RRC message including data of a Non-Access Stratum protocol (NAS message) input from the NAS control unit 114, and outputs the created RRC message to the data generation unit 101. When the RRC message input from the data processing unit 109 includes data of a Non-Access Stratum protocol, the radio resource control unit 113 outputs this data to the NAS control unit 114.

Further, the radio resource control unit 113 analyzes the RRC message input from the data processing unit 109, and obtains information indicating necessity/unnecessity of access barring processing with the AS function (barring skip information).

The radio resource control unit 113 analyzes the RRC message input from the data processing unit 109, and when the RRC message includes access barring information of each EPS bearer, outputs this data to the NAS control unit 114.

When an EPS bearer identifier of transmission data from a higher layer is configured not to require access barring processing with the AS function based on barring skip information of each EPS bearer, which is included in broadcast information, the radio resource control unit 113 skips processing of access barring in calling.

In the present embodiment, the NAS control unit 114 outputs, to the radio resource control unit 113, the data of the Non-Access Stratum protocol to be transmitted to the MME. In addition, the data of the Non-Access Stratum protocol received from the MME is input to the NAS control unit 114 through the radio resource control unit 113.

When the terminal apparatus 1 initiates a call, the NAS control unit 114 selects an EPS bearer to be used based on packet filter information, and configures that an establishment cause for establishing radio connection (EstablishmentCause included in the RRC connection request) is transmission for a normal call, and notifies the radio resource control unit 113 of it.

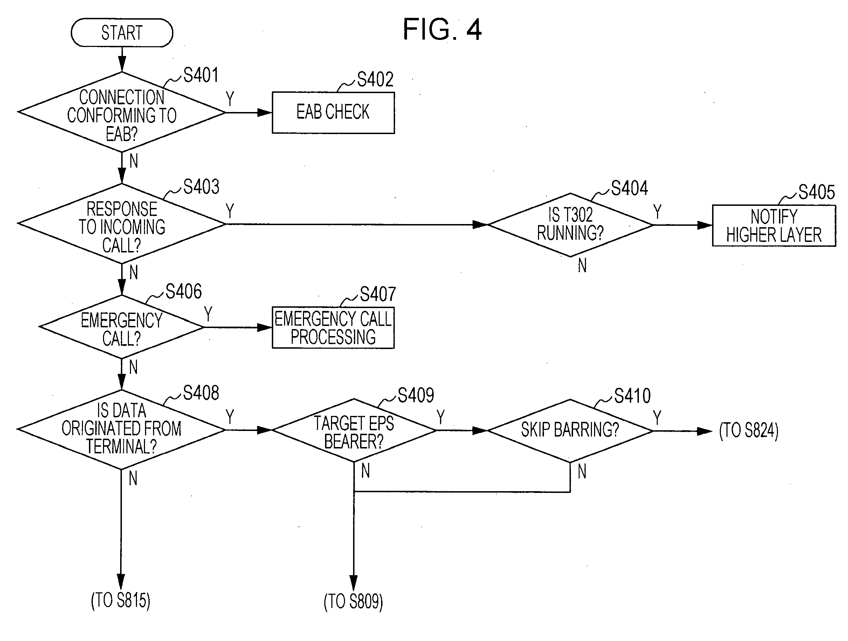

An example of access control in a case where RRC connection is established with the base station apparatus 2 when the terminal apparatus 1 initiates a call will be described with reference to Fig. 4. Note that, detailed description for the operations in common with the procedure when the conventional RRC connection is established, which has been described based on Fig. 8, will be omitted similarly to the first embodiment.

First, the NAS control unit 114 of the terminal apparatus 1 allocates transmission data to an EPS bearer based on packet filter information, and performs access barring based on access barring information of each EPS bearer, which is input from the radio resource control unit 113. Alternately, the access barring may be performed based on information indicating whether or not data to be transmitted is a specific application or service.

In Fig. 4, the AS function of the terminal apparatus 1 in an idle state initiates the procedure of RRC connection establishment based on a request from a higher layer. The terminal apparatus 1 judges whether setting up of RRC connection is access conforming to EAB (Extended Access Barring) (access of MTC) (step S401), and in the case of the access conforming to the EAB, performs an access barring check based on access barring information about the EAB included in SIB 14, and when access of an access class of the terminal apparatus 1 is barred, notifies the higher layer that barring is underway and the establishment fails (step S402).

Then, the terminal apparatus 1 judges whether setting up of the RRC connection is for an incoming response call (step S403), and in the case of being for an incoming response call, judges whether or not the timer T302 is running (step S404). When the timer T302 is running, the terminal apparatus 1 notifies the higher layer that barring is underway and the establishment fails (step S405). When the timer T302 is not running at step S404, processing subsequent to step S824 above of Fig. 8 is performed.

Next, the terminal apparatus 1 judges whether setting up of the RRC connection is for an emergency call (step S406), and in the case of being for an emergency call, when a value of ac-BarringForEmergency included in SIB2 is true, judges that access barring is underway if the terminal apparatus 1 does not have access classes 11 to 15, and judges whether or not access barring is underway based on ac-BarringForSpecialAC if the terminal apparatus 1 has any of access classes 11 to 15. When judging that access barring is underway, the terminal apparatus 1 notifies the higher layer that the establishment fails (step S407).

Next, the terminal apparatus 1 judges whether setting up of the RRC connection is for a call from the terminal apparatus 1 (S408), and in the case of not being a call from the terminal apparatus 1, processing subsequent to step S815 above of Fig. 8 is performed. In the case of a call from the terminal apparatus 1, the terminal apparatus 1 judges whether an EPS bearer of data to be transmitted is an EPS bearer skipping access barring with the AS function (step S409). Specifically, an EPS bearer identifier skipping access barring with the AS function may be obtained from broadcast information of a serving cell, or when access barring information of each EPS bearer is included in the broadcast information, the EPS bearer may be judged as the EPS bearer skipping access barring with the AS function or an EPS bearer of an existing EPS bearer identifier or all EPS bearers may be judged as EPS bearers skipping access barring with the AS function.

In the case of not being the EPS bearers skipping access barring with the AS function, processing subsequent to step S809 above of Fig. 8 is performed. In the case of the EPS bearers skipping access barring with the AS function, whether the broadcast information of the serving cell (for example, SIB2) includes barring skip information (step S404) is judged, and when including the barring skip information, processing subsequent to step S824 above of Fig. 8 is performed. When not including the barring skip information, processing subsequent to step S809 above of Fig. 8 is performed. Note that, the terminal apparatus 1 may perform the processing of step S408 immediately before any processing of step S401, step S403, and step S406.

In this manner, by identifying necessity/unnecessity of access barring with the AS function by the radio resource control unit 113 and enabling to invalidate access barring with the AS function when RRC connection for a call is established, it is possible to perform control so that priority of a specific application or service (for example, MMTEL) is increased. Further, even when the MME is not able to grasp a congestion status of each base station apparatus 2, it is possible to perform access control more finely based on barring skip information broadcasted by each base station apparatus 2 and access barring information of each EPS bearer.

Note that, though an example in which whether or not barring skip information is included is judged at step S410 above is indicated, without limitation thereto, processing subsequent to step S824 above of Fig. 8 may be performed regardless of presence/absence of barring skip information.

The embodiments described above are only exemplifications, and may be realized by using various modified examples and substitution examples. For example, the uplink transmission scheme may be applied also to communication systems of both an FDD (frequency division duplex) scheme and a TDD (time division duplex) scheme. In addition, names of respective parameters and respective events, which are indicated in the embodiments, are given for convenience of description, and even when names in practical use and names of the embodiments of the invention are different, there is no influence on the gist of the invention which is claimed by the embodiments of the invention.

The access controls described in each embodiment are not performed independently, and may be of course performed by combining the controls described in each embodiment.

The terminal apparatus 1 includes apparatuses having a communication function, such as not only a portable or movable mobile station apparatus, but also stationary or unmovable electronic equipment which is installed indoors and outdoors such as, for example, AV equipment, kitchen equipment, a cleaning/washing machine, air conditioning equipment, office equipment, an automatic vending machine, other domestic equipment, measurement equipment, an in-vehicle apparatus, and further, wearable equipment which is wearable, or healthcare equipment. Further, the terminal apparatus 1 is used not only for person to person or person to equipment communication, but also for equipment to equipment communication (Machine Type Communication), and apparatus to apparatus communication (D2D).

The terminal apparatus 1 is also referred to as a user terminal, a mobile station apparatus, a communication terminal, a moving body, a terminal, UE (User Equipment), or an MS (Mobile Station). The base station apparatus 2 is also referred to as a radio base station apparatus, a base station, a radio base station, a fixed station, NB (NodeB), eNB (evolved NodeB), a BTS (Base Transceiver Station), or a BS (Base Station).

Note that, the base station apparatus 2 is referred to as NB in UMTS which is prescribed by 3GPP, and as eNB in the EUTRA and the Advanced EUTRA. Note that, the terminal apparatus 1 in the UMTS prescribed by 3GPP, the EUTRA, and the Advanced EUTRA, is referred to as UE.

Further, though methods, means, or algorithm steps for realizing functions or a part of functions of each unit of the terminal apparatus 1 and the base station apparatus 2 have been described specifically in combination by using functional block diagrams for convenience of description, they may be embodied directly in hardware, in a software module executed by a processor, or in a combination thereof.

If being implemented in hardware, the terminal apparatus 1 and the base station apparatus 2 may be configured by a feeding device or a battery for supplying power to the terminal apparatus 1 and the base station apparatus 2, a display device of a liquid crystal or the like and a display drive device, a memory, an input/output interface and an input/output terminal, a speaker, or other peripheral devices, in addition to the described configuration of the block diagram.

If being implemented in software, the function may be held or transmitted as one or more commands or codes on a computer readable medium. The computer readable media include both communication media and computer recording media including a medium that facilitates transferring a computer program from one place to another place.

Then, control of the terminal apparatus 1 and the base station apparatus 2 may be performed by recording one or more commands or codes in a computer readable recording medium and causing a computer system to read the one or more commands or codes recorded in this recording medium for execution. Note that, the "computer system" here is set to include an OS and hardware such as peripheral equipment.

Operations described in each of the embodiments of the invention may be realized by a program. The program which is operated at the terminal apparatus 1 and the base station apparatus 2 related to each of the embodiments of the invention is a program which controls a CPU or the like (program causing a computer to function) so as to realize the functions of the aforementioned embodiments related to each of the embodiments of the invention. In addition, information handled in these devices is temporarily accumulated in a RAM during processing thereof, and then stored in various ROMs or HDDs to be read out by the CPU as necessary, for correction and writing.

In addition, although the functions of the embodiments described above are realized by executing the program, the functions of each of the embodiments of the invention are also realized in some cases by performing processing based on instructions of the program in conjunction with an operating system, other application programs or the like.

Moreover, the "computer readable recording medium" refers to a portable medium such as a semiconductor medium (for example, such as a RAM or a nonvolatile memory card), an optical recording medium (for example, such as a DVD, an MO, an MD, a CD or a BD), a magnetic recording medium (for example, a magnetic tape or a flexible disk), or a storage device including a disc unit embedded in a computer system. Further, the "computer readable recording medium" includes one which dynamically holds a program for a short time, such as a communication line in a case where the program is transmitted through a network such as the Internet or a communication line such as a telephone line, and one which holds a program for a fixed time, such as a volatile memory inside a computer system serving as a server or a client in the above case.

The aforementioned program may be one for realizing a part of the functions described above, and further may be one capable of realizing the functions described above by being combined with a program which has been already recorded in a computer system.

Each functional block or various features of the terminal apparatus 1 and the base station apparatus 2 used in each of the embodiments described above may be implemented or executed by a general-purpose processor, a digital signal processor (DSP), an application specific integrated circuit (ASIC) or a general application integrated circuit (IC), a field programmable gate array signal (FPGA), or other programmable logic devices, discrete gates or transistor logic, a discrete hardware component, which is designed to execute the functions described in the present specification, or a combination thereof.

The general-purpose processor may be a microprocessor, or alternatively, the processor may be a conventional processor, a controller, a microcontroller or a state machine. The general-purpose processor or each circuit described above may be configured by a digital circuit or may be configured by an analogue circuit.

The processor may be implemented also as a combination with a computing device. For example, a DSP and a microprocessor, a plurality of microprocessors, one or more microprocessors connected to a DSP core, or other such configurations are combined.

Though each of the embodiments of the invention has been disclosed in terms of a technique related to a terminal apparatus, a base station apparatus, a communication system, an access control method, and an integrated circuit for performing access control efficiently, a communication scheme which may be applied to each embodiment is not limited to EUTRA or a communication scheme having compatibility with EUTRA such as Advanced EUTRA.

For example, the technique described in this specification may be used in various communication systems using code division multiple access (CDMA), time division multiple access (TDMA), frequency division multiple access (FDMA), orthogonal FDMA (OFDMA), single carrier FDMA (SC-FDMA), and other access schemes. In addition, in this specification, a system and a network may be used synonymously.

As above, the embodiments of the invention have been described specifically based on specific examples, however, it is clear that a gist of each embodiment and a scope of Claims of the invention are not limited to these specific examples, and design change and the like which are not departed from the gist of the invention are also included. That is, the description in the present specification aims to give exemplary description and does not give any limitation to each embodiment of the invention.

The invention can be modified in various manners within the scope defined by the Claims, and embodiments obtained by appropriately combining technical means disclosed in different embodiments are also encompassed by the technical scope of the invention. The configuration in which elements described in each of the aforementioned embodiments and achieving similar effects are replaced with each other is also encompassed in the technical scope of the invention.

### Industrial Applicability

The invention is able to be applied to a mobile phone, a personal computer, a tablet computer, and the like.

### Reference Signs List

- 1: terminal apparatus
- 2, 2-1, 2-2: base station apparatus
- 101,201: data generation unit
- 102, 202: transmission data storage unit
- 103, 203: transmission HARQ processing unit
- 104, 204: transmission processing unit
- 105,205: radio unit
- 106, 206: reception processing unit
- 107, 207: reception HARQ processing unit
- 108, 208: MAC information extraction unit
- 109, 209: data transmission unit
- 110: measurement unit
- 111,210: PHY control unit
- 112, 211: MAC control unit
- 113, 212: radio resource control unit
- 114: NAS control unit
- 213: network signal transmission/reception unit

## Claims

1. A terminal apparatus communicating with a base station apparatus, comprising:
a data processing unit configured to obtain barring skip information broadcasted from the base station apparatus and
a radio resource control unit configured to obtain a request for setting up radio resource control connection and a cause for setting up the radio resource control connection from a higher layer of a radio resource control layer of the terminal apparatus, wherein
the barring skip information is information indicating skipping access barring against a specific call,
the data processing unit outputs the barring skip information to the radio resource control unit, and
the radio resource control unit judges, in a case where setting up of the radio resource control connection is for the specific call and the barring skip information is broadcasted, that access barring is not underway regardless of a running state of a timer for judging whether or not access by a call is barred, and performs, in a case where setting up of the radio resource control connection is for the specific call and the barring skip information is not broadcasted, an access barring check in a call based on a cause for setting up a normal call even in a case of a specific call.

2. A communication system comprising:
a terminal apparatus and
a base station apparatus communicating with the terminal apparatus, wherein
the base station apparatus includes barring skip information for skipping access barring against a specific call in broadcast information and transmits the broadcast information including the barring skip information and
the terminal apparatus obtains the barring skip information and obtains a request for setting up radio resource control connection and a cause for setting up the radio resource control connection from a higher layer of a radio resource control layer of the terminal apparatus, and in a case where setting up of the radio resource control connection is for the specific call and the barring skip information is broadcasted, the terminal apparatus judges that access barring is not underway regardless of a running state of a timer for judging whether or not access by a call is barred, and in a case where setting up of the radio resource control connection is for the specific call and the barring skip information is not broadcasted, the terminal apparatus performs an access barring check in a call based on a cause for setting up a normal call even in a case of a specific call.

3. An access control method applied to a terminal apparatus communicating with a base station apparatus, the method comprising at least the steps of:
obtaining, from the base station apparatus, barring skip information for skipping access barring against a specific call;
obtaining, from a higher layer of a radio resource control layer of the terminal apparatus, a request for setting up radio resource control connection and a cause for setting up the radio resource control connection;
judging, in a case where setting up of the radio resource control connection is for the specific call and the barring skip information is broadcasted, that access barring is not underway regardless of a running state of a timer for judging whether or not access by a call is barred; and
performing, in a case where setting up of the radio resource control connection is for the specific call and the barring skip information is not broadcasted, an access barring check in a call based on a cause for setting up a normal call even in a case of a specific call.

4. An integrated circuit mounted in a terminal apparatus communicating with a base station apparatus, the integrated circuit causing the terminal apparatus to exert the functions of:
obtaining, from the base station apparatus, barring skip information for skipping access barring against a specific call;
obtaining, from a higher layer of a radio resource control layer of the terminal apparatus, a request for setting up radio resource control connection and a cause for setting up the radio resource control connection;
judging, in a case where setting up of the radio resource control connection is for the specific call and the barring skip information is broadcasted, that access barring is not underway regardless of a running state of a timer for judging whether or not access by a call is barred; and
performing, in a case where setting up of the radio resource control connection is for the specific call and the barring skip information is not broadcasted, an access barring check in a call based on a cause for setting up a normal call even in a case of a specific call.
